# FASCICULE DE BREVET EUROPEEN

(11) **EP 1 170 988 B1**
(45) Date de publication et mention de la délivrance du brevet: **07.01.2004**
(21) Numéro de dépôt: 00917146.3
(22) Date de dépôt: 06.04.2000
(51) Int. Cl.: A01J 25/13

(54) **DISPOSITIF POUR LA FABRICATION DE FROMAGES ET PROCEDE DE FABRICATION CORRESPONDANT**
VORRICHTUNG ZUR HERSTELLUNG VON KÄSE UND VERFAHREN ZU DEREN HERSTELLUNG
DEVICE FOR MAKING CHEESE AND CORRESPONDING PRODUCTION METHOD

(30) Priorité: 06.04.1999 FR 9904425
(43) Date de publication de la demande: 16.01.2002
(73) Titulaire: DERODE, Bernard, 49430 Durtal (FR)
(72) Inventeur: DERODE, Bernard, 49430 Durtal (FR)
(74) Mandataire: Vidon, Patrice
(86) Numéro de dépôt international: PCT/FR2000/000877
(87) Numéro de publication internationale: WO 2000/059294

(56) Documents cités:
- FR-A- 1 123 578
- FR-A- 1 494 977
- FR-A- 2 063 234
- FR-A- 2 533 411

## Description

L'invention concerne le domaine des procédés et des dispositifs utilisés pour la fabrication des fromages selon le préambule des revendications 1 et 14.

Plus précisément, l'invention concerne le domaine de tels procédés et de tels dispositifs utilisés pour la fabrication des fromages, notamment, à pâte molle ou à pâte fraîche.

La fabrication des fromages a longtemps été effectuée de façon artisanale et a connu une industrialisation relativement tardive. Les procédés industriels mis en oeuvre dans ce cadre sont utilisés pour la fabrication de fromages à grande échelle. En ce qui concerne les petites ou moyennes production, les procédés utilisés demeurent relativement rustiques. Or, certains impératifs, notamment ceux résultants des dispositions réglementaires prises par l'Union Européenne, imposent une normalisation pour la fabrication des fromages, notamment dans le but de mieux contrôler leur composition et, corollairement, leur état sanitaire.

Il a déjà été proposé dans l'état de la technique divers procédés et dispositifs permettant de rationaliser, de normaliser et d'optimiser les différentes étapes de fabrication des fromages à pâte fraîche ou à patte molle, pouvant être mis en oeuvre à petite ou moyenne échelle.

A ce titre, on peut notamment citer le procédé et le dispositif décrit dans le brevet française FR-2 533 411, au nom du Déposant. La technique décrite dans ce document propose un dispositif pour la fabrication de fromage à pâte molle ou à pâte fraîche comprenant au moins un jeu de moules perforés disposé dans une enceinte pourvue de moyens d'évacuation du petit-lait. Le dispositif est également pourvu de moyens de distribution dans les moules perforés du mélange de lait, de présure et de ferments. Après caillage du lait, le petit-lait est évacué par les moyens d'évacuation prévus à cet effet et les caillés sont récupérés après extraction des moules de l'enceinte et démoulage. Ces caillés sont ensuite placés en chambre de maturation pour être transformés en fromages.

Ce type de dispositif offre l'avantage principal de permettre une normalisation de la fabrication des fromages frais ou à pâte molle, dans d'excellentes conditions d'hygiène alimentaire.

Un tel dispositif peut de plus être réalisé sous forme d'une unité mobile, rendant son transport aisé et lui permettant d'être utilisé facilement, notamment dans les pays pratiquant une agriculture traditionnelle.

On notera que, d'une manière générale, il est souhaitable de pouvoir fabriquer un nombre de fromages maximal dans un espace donné. Or, les moules du dispositif décrit ci-dessus sont séparés les uns des autres par des espacements relativement importants pour permettre l'individualisation des caillés lors de leur démoulage sur une grille. Un tel dispositif présente donc un ration volume occupé / nombre de caillés réalisés relativement faible.

L'objectif principal de la présente invention est de proposer un perfectionnement à ce type de dispositif permettant d'augmenter le nombre de caillés réalisés pour un dispositif de volume donné.

Un autre objectif est de permettre la réalisation d'un tel dispositif présentant une grande facilité d'utilisation et pouvant, le cas échéant, s'affranchir de l'utilisation de tout moyen électrique.

Encore une autre objectif de l'invention est de proposer un tel dispositif qui puisse être réalisé à un coût raisonnable.

Egalement un autre objectif de l'invention, est de divulguer un tel dispositif qui puisse être facilement réalisé sous forme d'unité mobile rendant son transport aisé.

Ces objectifs sont atteints grâce à l'invention qui concerne un dispositif pour la fabrication de fromage à pâte molle ou à pâte fraîche comprenant au moins un premier jeu de moules perforés et au moins un deuxième jeu de moules perforés disposés dans une enceinte pourvue de moyens d'évacuation du petit-lait,
caractérisé en ce que lesdits premier et deuxième jeux de moules sont conçus pour s'insérer l'un dans l'autre.

On notera que l'on entend dans la présente demande les termes jeux de moules comme un ensemble de plusieurs moules structurellement reliés entre eux.

La présente invention propose un nouveau dispositif permettant de mettre à profit les volumes existant entre les moules, jusqu'ici non utilisés, pour y insérer des moules. Il est ainsi possible d'augmenter la capacité des dispositifs existants décrits ci-dessus.

Selon une variante préférentielle plus élaborée et particulièrement intéressante de l'invention, le dispositif est caractérisé en ce que lesdits premier et deuxième jeux de moules sont conçus pour s'insérer en position tête-bêche et pour coopérer chacun avec au moins une grille amovible d'extrémité, ladite enceinte étant pourvue de moyens de retournement et d'une paroi formant fond amovible.

Selon une variante préférentielle de l'invention, lesdits premier et deuxième jeux de moules perforés sont montés coulissants dans ladite enceinte, ce qui permet de faciliter leur extraction de l'enceinte.

On pourra envisager plusieurs types de dispositifs pour retourner l'enceinte. Toutefois, selon une variante particulièrement intéressante, les moyens de retournement utilisés de cette enceinte sont des moyens de pivotement de celle-ci autour d'un axe. Avantageusement, ces moyens pourront être actionnés manuellement afin de simplifier la fabrication du dispositif et d'augmenter son champ d'utilisation.

Dans le but d'occuper l'essentiel du volume de l'enceinte, les moules du premier jeu présentent avantageusement une section transversale essentiellement complémentaire à celle des moules du deuxième jeu. Ces sections pourront être de formes diverses et variées. Ainsi on pourra notamment conférer à ces moules une section transversale carrée ou rectangulaire. Selon une autre variante on utilisera des moules présentant une section transversale hexagonale. Selon encore un autre exemple de réalisation on pourra utiliser un premier jeu de moules présentant une section transversale carrée ou rectangulaire, et un second jeu de moules présentant une section transversale octogonale. D'une manière générale, on pourra envisager n'importe qu'elle type de section(s) pour peu que celle(s)-ci permettent aux moules perforés d'occuper un volume maximal de ladite enceinte.

L'invention concerne également un procédé de fabrication de fromage à partir d'un dispositif tel que décrit ci-dessus, le procédé comprenant les étapes consistant à :
- remplir ladite enceinte au moins partiellement avec du lait ;
- autoriser le caillage du lait jusqu'à l'obtention de caillés et de petit-lait ;
- évacuer le petit-lait de ladite enceinte grâce auxdits moyens d'évacuation ;
- retourner ladite enceinte grâce auxdits moyens de retournement ;
- désolidariser la grille se trouvant en position inférieure et récupérer les caillés provenant du jeu de moules correspondant ;
- désolidariser la paroi formant fond de ladite enceinte ;
- retourner ladite enceinte grâce auxdits moyens de retournement ;
- désolidariser l'autre grille se trouvant en position inférieure et récupérer les caillés provenant de l'autre jeu de moules.

On notera que la désolidarisation de la paroi formant fond pourra être effectuée avant ou après retournement de l'enceinte.

Selon un aspect préférentiel de l'invention, le procédé comprend les étapes complémentaires consistant à faire coulisser les jeux premier et second jeu de moules avant de désolidariser lesdites grilles.

On notera que selon un autre mode de réalisation, permettant la fabrication de fromages plus petits avec moins de lait, la hauteur des moules du premier jeu et celle des moules du deuxième jeu correspond sensiblement à la moitié de la hauteur de ladite enceinte, les du deuxième jeu possède un fond perforé tandis que le autres moules) sont ouverts à chacune de leur extrémité et le dispositif comprend une grille intermédiaire pourvue d'ouvertures de la taille de la section des moules du deuxième jeu apte à coopérer avec une extrémité des moules.

Dans ce cas, le procédé d'utilisation d'un tel dispositif comprend les étapes consistant à :
- remplir ladite enceinte au moins partiellement avec du lait additionné de présure et de ferments;
- autoriser le caillage du lait jusqu'à l'obtention de caillés et de petit-lait ;
- évacuer le petit-lait de ladite enceinte grâce auxdits moyens d'évacuation;
- relever et fixer le deuxième jeu de moules ;
- placer ladite grille d'égouttage intermédiaire sur ledit premier jeu de moules ;
- positionner une grille d'égouttage sur la partie supérieure de l'enceinte
- retourner ladite enceinte grâce auxdits moyens de retournement ;
- remplacer la paroi formant fond de ladite enceinte par une grille d'égouttage;
- retourner ladite enceinte grâce auxdits moyens de retournement ;
- désolidariser la grille se trouvant en position inférieure et récupérer les caillés provenant du jeu de moules correspondant ;
- retourner ladite enceinte grâce auxdits moyens de retournement ;
- désolidariser l'autre grille se trouvant en position inférieure et récupérer les caillés provenant de l'autre jeu de moules.

Il pourra être envisagé différents procédé pour la réalisation des jeux de moules utilisés dans le cadre de la présente invention. Toutefois, préférentiellement, ces jeux de moules seront constitués par l'association de plaques complémentaires en matière plastiques formant demi-moules réalisés par thermoformage. Ces demi-plaques pourront, le cas échéant être solidarisés au dispositif grâce à des moyens de fixation prévus sur les grilles d'égouttage ou sur l'enceinte. De telles plaques pourront être facilement nettoyées, soit in situ soit éventuellement après avoir été désolidarisées de l'enceinte. Dans le but de nettoyer les nettoyages in situ, les moules réalisés par l'association desdites plaques complémentaires présenteront des passages inter-moules facilitant la circulation des produits de nettoyage.

Enfin, on notera que l'invention concerne aussi un système de décaillage pouvant le cas échéant être utilisé avec un dispositif selon l'invention. Un tel système de décaillage est constitué par un support horizontal sur lequel est fixé un jeu de tiges verticales perpendiculaires audit support et pourvus de fils en étoile ainsi que de moyens permettant de mettre en rotation lesdites tiges. La rotation des tiges permet de décailler les pâtes de fromages présentant dans les différents moules.

L'invention, ainsi que les différents avantages qu'elle présente, seront plus facilement compris grâce à la description qui va suivre d'un mode non limitatif de réalisation de celle-ci, en référence aux dessins dans lesquels :
- les figures 1 à 6 représentent une vue schématique transversale en coupe d'un premier mode de réalisation d'un dispositif de fabrication de fromages selon l'invention, montré durant les différentes étapes de son procédé d'utilisation ;
- les figures 7 à 9 représentent des exemples non limitatifs de sections de moules pouvant être utilisés pour la mise en oeuvre de l'invention ;
- la figure 10 représente une vue schématique en coupe transversale d'un second mode de réalisation de l'invention.
- les figures 11 à 17 représentent une vue schématique transversale en coupe d'un troisième mode de réalisation d'un dispositif de fabrication de fromages selon l'invention, montré durant les différentes étapes de son procédé d'utilisation ;
- les figures 18 à 20 représente les jeux de moules d'encore un autre mode de réalisation de l'invention.

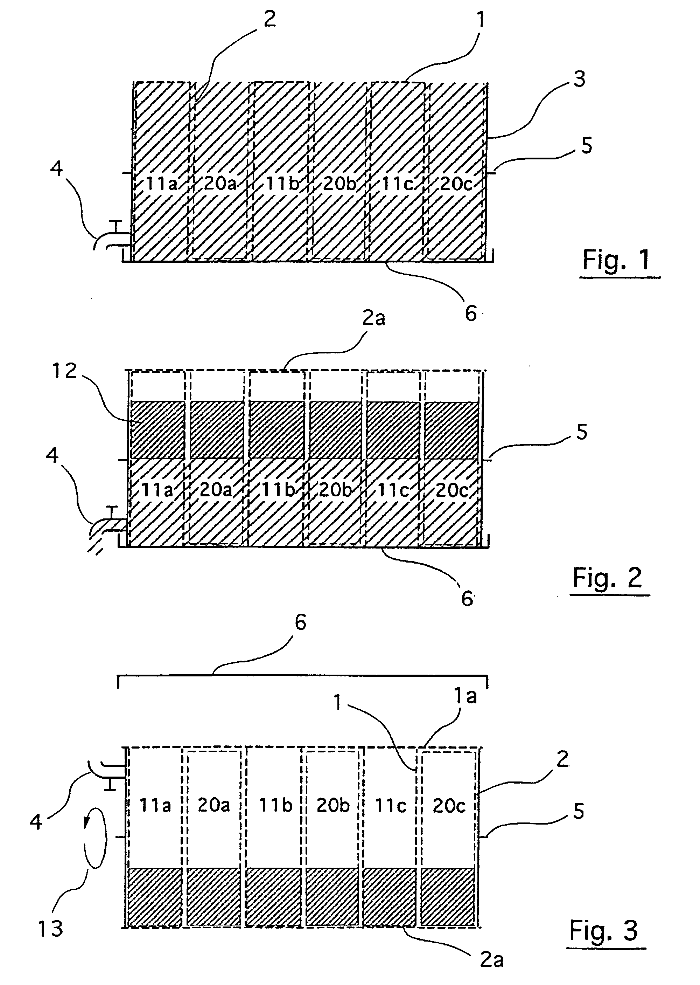

En référence à la figure 1, le dispositif de fabrication de fromages selon la présente invention comprend une enceinte 3 à l'intérieur de laquelle sont disposés un premier jeu 1 de moules 11a, 11b, 11c et un second jeu 2 de moules 20a, 20b, 20c. On comprendra que seuls les moules de la première rangée de ces jeux de moules peuvent être représentés sur les figures 1 à 6, mais que ces jeux de moules présentent plusieurs rangées de moules.

Les moules du premier jeu 1 et les moules du second jeu 2 sont tous perforés sur l'ensemble de leur surface de façon à laisser s'écouler les fluides laitiers utilisés pour la fabrication des fromages.

Les moules du premier jeu de moules 1 sont, dans le positionnement du dispositif représenté à la figure 1, ouverts dans leur partie inférieure tandis que les moules du jeu de moules 2 sont ouverts dans leur partie supérieure 2. Comme il ressort de la figure 1, le jeu 1 de moules 1 la, 11b, 11c est monté inséré tête-bêche dans le jeu 2 de moules 20a, 20b, 20c. Le jeu 1 de moules 11a, 11b, 11c est conçu pour coopérer avec une grille (qui sera montrée sur une des figures suivantes). De même, le jeu 2 de moules est également conçu pour coopérer avec une autre grille (qui sera également montrée sur une autre figure).

Par ailleurs, on notera que l'enceinte 3 est pourvu de moyens d'évacuation 4 du petit-lait se présentant sous la forme d'un simple robinet et est équipée d'une paroi formant fond 6.

Le dispositif peut également être équipé de moyens automatiques (non représentés) de distribution du mélange de lait, de présure et de ferments utilisé pour la fabrication du fromage.

Le procédé d'utilisation d'un tel dispositif de fabrication de fromages est décrit maintenant ci-après en référence aux figures 1 à 6.

Lors d'une première phase du procédé, l'enceinte 3 est remplie d'un mélange de lait, de présure et de ferments. Ce mélange est représenté en lignes hachurées larges sur les figures 1 et 2.

Ce mélange est laissé dans l'enceinte jusqu'à la formation de caillés 12 comme on peut le voir sur la figure 2. De par leur densité inférieure à celle du petit-lait, ces caillés flottent à la surface de celui-ci.

Le petit-lait est ensuite évacué par les moyens d'évacuation 4 spécialement prévus à cet effet. Les caillés se déposent alors au fond de l'enceinte 3.

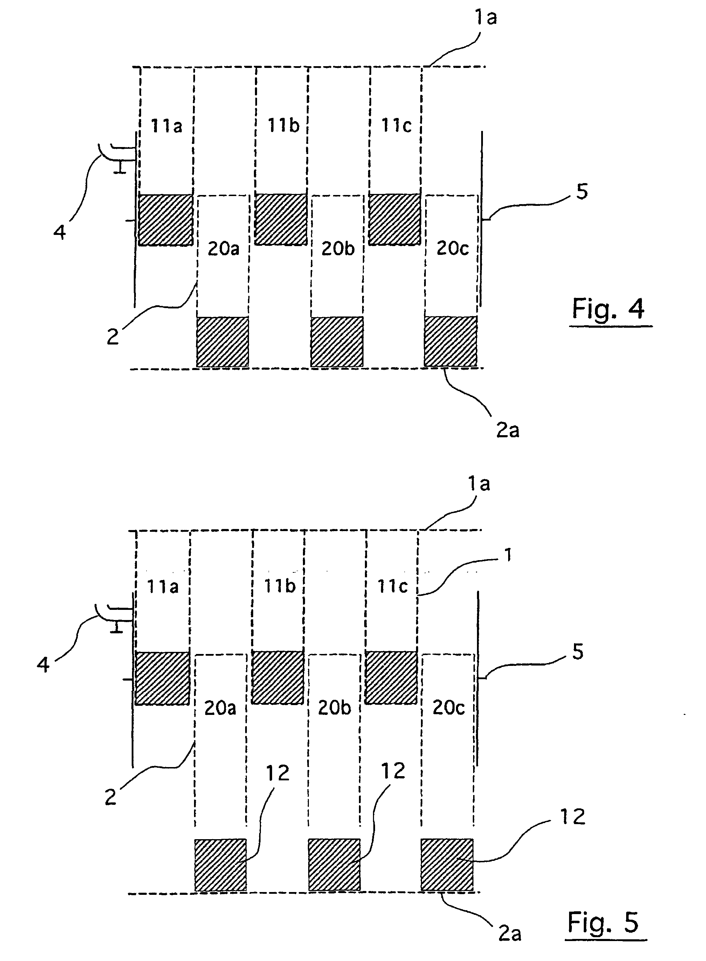

On récupère ensuite d'abord les caillés présents dans les moules 20a, 20b, 20c du jeu 2. A cet effet, les moyens de retournement 5, en l'occurrence constitués par des moyens de pivotement autour d'un axe comme symbolisé par la flèche circulaire 13 montrée à la figure 3, sont actionnés. Parallèlement, le fond 6 qui se retrouve ainsi en position supérieure est désolidarisé du reste de l'enceinte. On fait alors coulisser l'ensemble constitué par le jeu de moules 2 et la grille 2a comme indiqué sur la figure 4. On continue ensuite d'abaisser la grille 2a de façon à récupérer les caillés 12 sur cette grille.

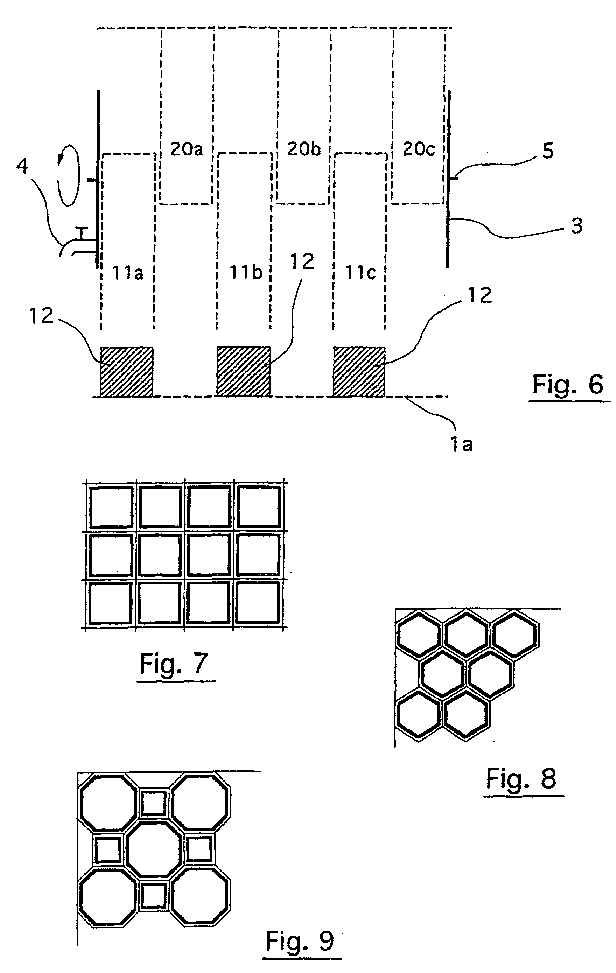

On récupère ensuite les caillés présents dans le jeu 1 de moules 11a, 11b, 11c en faisant pivoter l'enceinte 3 en actionnant les moyens 5 prévus à cet effet comme indiqué sur la figure 6. On récupère alors les caillés 12 présents sur la grille 1a.

Un tel dispositif permet donc d'optimiser le volume intérieur défini par l'enceinte 3 en augmentant le nombre de fromages pouvant être fabriqués à partir du mélange de lait, de présure et de ferments disposé dans celle-ci. On comprend en effet que grâce à l'invention, tout cet espace peut être occupé par les moules 11a, 11b, 11c, 20a, 20b, 20c des deux jeux de moules.

A ce sujet on notera que dans le cadre du présent mode de réalisation, ces moules présentent une section transversale carrée comme indiqué sur la figure 7. Toutefois, on comprendra que dans d'autres modes de réalisation, les moules pourront également présenter des sections différentes complémentaires de façon à occuper tout, ou à tout le moins l'essentiel, du volume intérieur de l'enceinte. A titre d'exemple illustratif seulement ces moules pourront présenter notamment une section transversale hexagonale comme indiqué sur la figure 8. On pourra également utiliser un jeu de moules présentant une forme octogonale et un autre jeu de moules présentant une section carrée comme indiqué sur la figure 9.On notera que l'on pourra utiliser des éléments pleins, fixés ou non à l'enceinte, pour occuper les volumes "morts" de celle-ci non occupés par des moules.

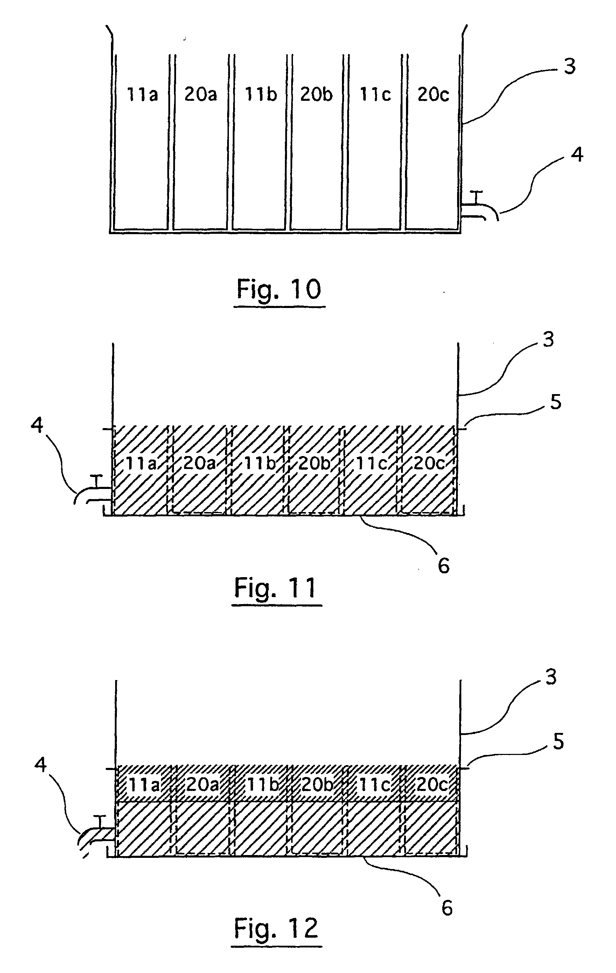

En référence à la figure 10, un autre mode de réalisation de l'invention est représenté. Dans la description de ce mode de réalisation, les éléments fonctionnellement semblables à ceux de l'exemple décrits ci-dessus ont été désignés avec les mêmes références.

Selon ce mode de réalisation, le dispositif selon l'invention comprend une enceinte 3 à l'intérieur de laquelle sont prévus un premier jeu de moules 11a,11b et 11c (reliés entre eux) et un deuxième jeu de moules 20a, 20b et 20c (reliés entre eux) qui s'insère dans le premier jeu de moules de façon à occuper essentiellement l'ensemble du volume intérieur défini par l'enceinte 3. Après caillage du lait, le petit-lait est évacué par les moyens 4 (on pourrait aussi envisager une évacuation du petit-lait en renversant l'enceinte 3). Un tel mode de réalisation est très simple à utiliser et à transporter.

Selon le mode de réalisation représenté aux figures 11 à 17, le dispositif comprend une enceinte 3 à l'intérieur de laquelle sont disposés deux jeux de moules perforés 11a, 11b, 11c et 20a, 20b, 20c dont la hauteur représente sensiblement la moitié de celle de l'enceinte 3. Ce mode de réalisation permet de réaliser de plus petits fromage avec moins de lait.

Les moules du premier jeu de moules 11a, 11b, 11c sont ouverts à leurs deux extrémités, inférieure et supérieure, alors que les moules 20a, 20b, 20c du deuxième jeu de moules sont ouverts dans leur partie supérieure et présentent un fond inférieur perforé.

Le premier jeu du moule 11a, 11b, 11c est inséré tête-bêche dans le deuxième jeu de moules 20a, 20b, 20c. Ces deux jeux de moules sont conçus pour coopérer avec deux grilles d'égouttage pour le premier jeu et une grille pour le deuxième jeu.

On notera que l'enceinte 3 est pourvue de moyens d'évacuation 4 du petit-lait et est équipée d'un fond amovible 6.

Le procédé d'utilisation d'un tel dispositif est le suivant.

Lors d'une première phase, l'enceinte 3 est remplie à moitié d'un mélange de lait, présure et ferments. Celui-ci est représenté en lignes hachurées sur la figure 11. Ce mélange est laissé dans l'enceinte 3 jusqu'à la formation de caillé 2, le caillé flottant à la surface du petit-lait comme indiqué sur la figure 12.

Le petit-lait est ensuite évacué par les moyens d'évacuation 4 prévus à cet effet. Les caillés se déposent alors au fond de l'enceinte 3.

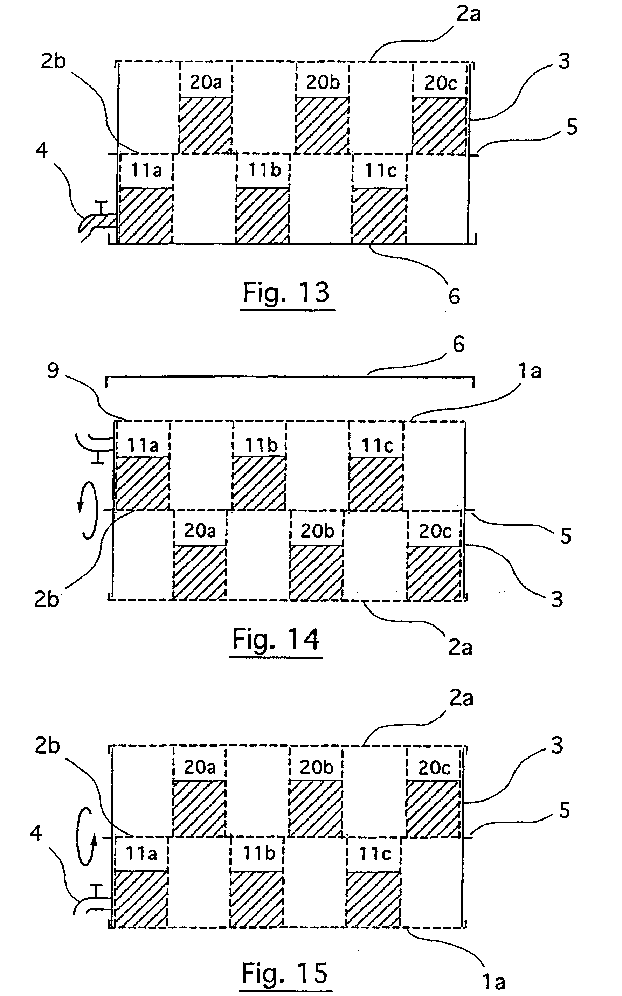

Le deuxième jeu de moules 20a, 20b, 20c est ensuite relevé et fixé par tout moyens adéquats (non représentés) en haut de l'enceinte 3 . Une grille intermédiaire d'égouttage 2b est alors placée à mi-hauteur de l'enceinte 3. Cette grille d'égouttage 2 b est pourvue de trous de la taille de la section des moules 20a, 20b, 20c, de façon à ne reposer que sur les moule 11a, 11b, 11c. Une deuxième grille d'égouttage 2a est enfin placée au sommet de l'enceinte. Ces étapes sont indiquées à la figure 13.

Durant l'égouttage, les moyens de retournement 5 sont actionnés et le fond amovible 6 remplacé par une grille d'égouttage 1a, comme indiqué sur la figure 14..

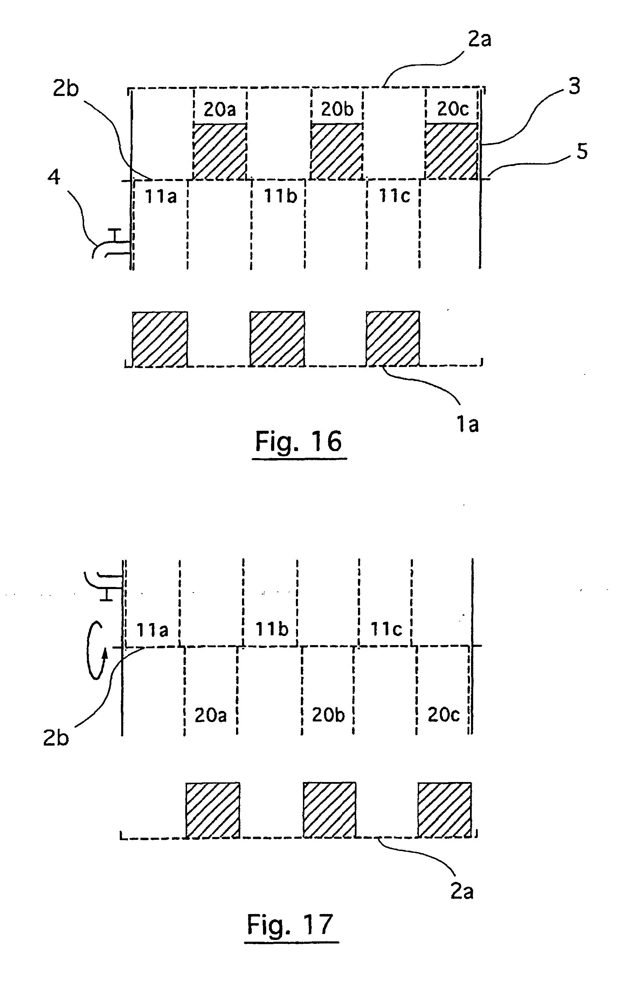

On récupère ensuite les caillés présents dans le jeu de moules 11a, 11b, 11c en faisant pivoter l'enceinte 3 de façon à ce qu'ils soient situés en partie inférieure et en désolidarisant la grille d'égouttage 1a. Ces étapes sont indiquées sur les figure 15 et 16.

On procède de même pour récupérer les caillés présents dans le jeu de moules 20a, 20b, 20c, après pivotement de l'enceinte 3 comme indiqué sur la figure 17.

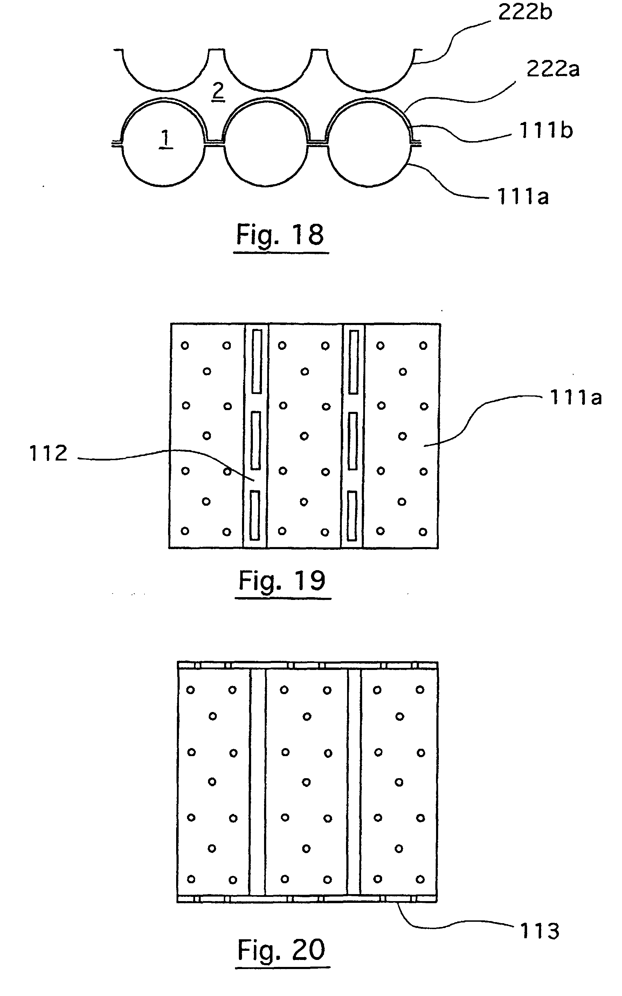

En référence à la figure 18, les jeux de moules d'encore un autre mode de réalisation de l'invention sont représentés en vue de dessus. Les moules du premier jeu 1 de moules présentent une section circulaire et les moules du second jeu 2 de moules présentent une section complémentaire. Ces jeux de moules sont constitués par l'association de plaques complémentaires (respectivement 111a et 111 b pour le premier jeu de moules et 222a et 222b pour le second jeu de moules), en matière plastique thermoformée. Un tel procédé de thermoformage réduit considérablement les coûts de fabrication de ces moules.

Comme on peut le voir sur la figure 19, qui représente une vue de face de la plaque 111a, des passages inter-moules 112 sont prévus de façon à faciliter les nettoyage de ceux-ci.

Comme indiqué sur la figure 20 qui représente une vue de face de la plaque 222a, les plaques peuvent être fixés par des moyens de fixation 113 aux grilles d'égouttage.

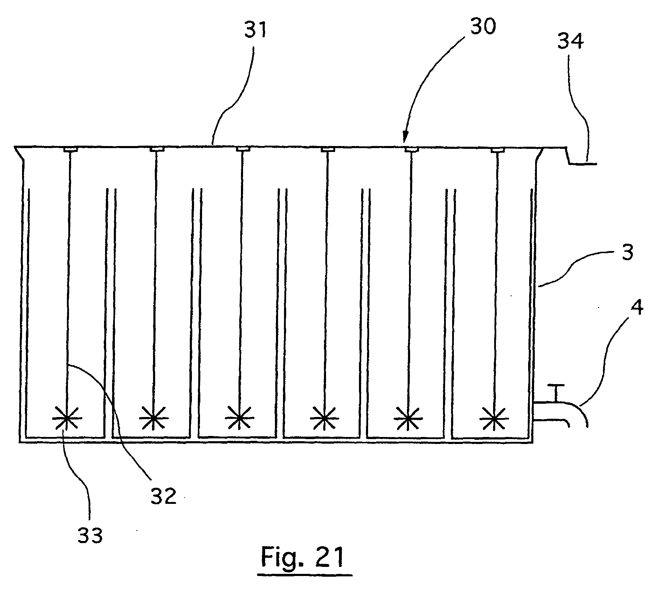

Enfin, comme indiqué sur la figure 21, les pâtes de fromages peuvent être décaillés grâce à un système de décaillage 30 spécialement conçu par le Demander pour être utilisé avec le dispositif de fabrication de fromages selon l'invention.

Ce dispositif de décaillage comprend un support horizontal 31 sur lequel est fixé un jeu de tiges verticales 32 perpendiculaires audit support et pourvus de fils en étoile 33 ainsi que de moyens 34 permettant de mettre en rotation lesdites tiges 32. Les moyens 34 peuvent être manuels ou motorisés. Le décaillage est obtenu par la rotation des fils en étoile 33.

Les modes de réalisation de l'invention ici décrits n'ont pas pour objet de réduire la portée de celle-ci. En conséquence, il pourra donc y être apporté de nombreuses modifications sans sortir de son cadre défini par les revendications annexées. En particulier, on notera que l'on pourra utiliser plus de deux jeux de moules.

## Revendications

1. Dispositif pour la fabrication de fromage notamment à pâte molle ou à pâte fraîche comprenant au moins un premier jeu (1) de moules (11a,11b,11c) perforés et au moins un deuxième jeu (2) de moules (20a, 20b, 20c) perforés disposés dans une enceinte (3),
**caractérisé en ce que** lesdits premier et deuxième jeux (1,2) de moules sont conçus pour s'insérer l'un dans l'autre.

2. Dispositif selon la revendication 1 **caractérisé en ce que** lesdits premier et deuxième jeux (1,2) de moules sont conçus pour s'insérer en position tête-bêche et pour coopérer chacun avec au moins une grille amovible d'extrémité (1a,2a), ladite enceinte (3) étant pourvue de moyens de retournement (5) et d'une paroi (6) formant fond amovible.

3. Dispositif selon la revendication 1 ou 2 **caractérisé en ce qu'**elle est pourvue de moyens d'évacuation (4) du petit-lait.

4. Dispositif selon l'une quelconque des revendications 2 ou 3 **caractérisé en ce que** lesdits jeux (1,2) de moules perforés sont montés coulissants dans ladite enceinte (3).

5. Dispositif selon la revendication 2 à 4 **caractérisé en ce que** lesdits moyens de retournement (5) de ladite enceinte sont des moyens de pivotement autour d'un axe.

6. Dispositif selon l'une quelconque des revendications 1 à 5 **caractérisé en ce que** les moules (11a,11b,11c) du premier jeu (1) présentent une section transversale essentiellement complémentaire à celle des moules (20a, 20b, 20c) du deuxième jeu (2) de façon à occuper l'essentiel du volume de ladite enceinte (3).

7. Dispositif selon la revendication 6 **caractérisé en ce que** lesdits moules (11a,11b,11c,20a, 20b, 20c) présentent une section transversale carrée ou rectangulaire.

8. Dispositif selon la revendication 6 **caractérisé en ce que** lesdits moules présentent une section transversale hexagonale.

9. Dispositif selon la revendication 6 **caractérisé en ce que** les moules (11a,11b,11c) du premier jeu (1) présentent une section transversale carrée ou rectangulaire et **en ce que** les moules (20a, 20b, 20c) du second jeu (2) présentent une section transversale hexagonale.

10. Dispositif selon l'une quelconque des revendications 2 à 9 **caractérisé en ce que** la hauteur des moules(11a,11b,11c) du premier jeu (1) et celle des moules(20a, 20b, 20c) du deuxième jeu (2) correspondant sensiblement à la moitié de la hauteur de ladite enceinte (3), **en ce que** les moules (20a, 20b, 20c) du deuxième jeu (2) possède un fond perforé tandis que le autres moules(11a,11b,11c) sont ouverts à chacune de leur extrémité et **en ce qu'**il comprend une grille intermédiaire (2b) pourvue d'ouvertures de la taille de la section des moules (20a, 20b, 20c) du deuxième jeu (2) apte à coopérer avec une extrémité des moules (11a,11b,11c).

11. Dispositif selon l'une quelconque des revendications 1 à 10 **caractérisé en ce** 1, que lesdits jeux (1,2) de moules sont constitués par l'association de plaques complémentaires (111a,111b,222a,222b) en matière plastique thermoformée formant demi-moules.

12. Dispositif selon la revendication 11 **caractérisé en ce qu'**il comprend des moyens de fixation (113) desdites plaques (111a,111b,222a,222b) au dispositif, prévus sur les grilles d'égouttage ou sur l'enceinte.

13. Dispositif selon l'une quelconque des revendications 11 ou 12 **caractérisé en ce que** les jeux (1,2) de moules réalisés par l'association desdites plaques complémentaires (111a,111b,222a,222b) présentent des passages inter-moules (112) facilitant la circulation des produits de nettoyage.

14. Procédé de fabrication de fromages, notamment à pâte molle ou à pâte fraîche, à l'aide du dispositif selon l'une des revendications 3 à 13 **caractérisé en ce qu'**il comprend les étapes consistant à :
- remplir ladite enceinte (3) au moins partiellement avec du lait additionné de présure et de ferments;
- autoriser le caillage du lait jusqu'à l'obtention de caillés et de petit-lait ;
- évacuer le petit-lait de ladite enceinte grâce auxdits moyens d'évacuation (4) ;
- retourner ladite enceinte (3) grâce auxdits moyens de retournement ;
- désolidariser la grille (2a) se trouvant en position inférieure et récupérer les caillés provenant du jeu de moules correspondant ;
- retourner ladite enceinte(3) grâce auxdits moyens de retournement ;
- désolidariser la paroi (6) formant fond de ladite enceinte ;
- désolidariser l'autre grille (1a) se trouvant en position inférieure et récupérer les caillés provenant de l'autre jeu de moules.

15. Procédé selon la revendication 14 **caractérisé en ce qu'**il comprend les étapes complémentaires consistant à faire coulisser les jeux de moules (1,2) avant de désolidariser lesdites grilles.

16. Procédé selon la revendication 14 ou 15 pour la fabrication de fromages, notamment à pâte fraîche ou à pâte molle **caractérisé en ce qu'**il comprend les étapes consistant à :
- remplir ladite enceinte (3) au moins partiellement avec du lait additionné de présure et de ferments;
- autoriser le caillage du lait jusqu'à l'obtention de caillés et de petit-lait ;
- évacuer le petit-lait de ladite enceinte grâce auxdits moyens d'évacuation (4) ;
- relever et fixer le deuxième jeu (2) de moules (20a, 20b, 20c) ;
- placer ladite grille d'égouttage intermédiaire (2b) sur ledit premier jeu de moules (11a,11b,11c);
- positionner une grille d'égouttage (2a) sur la partie supérieure de l'enceinte (3)
- retourner ladite enceinte (3) grâce auxdits moyens de retournement (5);
- remplacer la paroi (6) formant fond de ladite enceinte par une grille d'égouttage (1a) ;
- retourner ladite enceinte (3) grâce auxdits moyens de retournement (5);
- désolidariser la grille (1a) se trouvant en position inférieure et récupérer les caillés provenant du jeu de moules correspondant ;
- retourner ladite enceinte (3) grâce auxdits moyens de retournement (5);
- désolidariser l'autre grille (2a) se trouvant en position inférieure et récupérer les caillés provenant de l'autre jeu de moules.

17. Système de décaillage (30) pouvant être utilisé avec un dispositif selon l'une quelconque des revendications 1 à 13 **caractérisé en ce qu'**il est constitué par un support horizontal (31) sur lequel est fixé un jeu de tiges verticales (32) perpendiculaires audit support et pourvus de fils en étoile (33) ainsi que de moyens permettant de mettre en rotation lesdites tiges (32).

## Claims

1. Device for making cheese, in particular soft cheese or unripened cheese comprising at least one first set (1) of perforated moulds (11a, 11b, 11c) and at least one second set (2) of perforated moulds (20a, 20b, 20c) disposed in a chamber (3),
**characterized in that** the said first and second sets (1, 2) of moulds are designed to be inserted in each other.

2. Device according to claim 1 **characterized in that** the said first and second sets (1,2) of moulds are designed so as to be inserted in a head to tail position and so that each cooperates with at least one detachable end sieve (1a, 2a), the said chamber (3) being provided with turning means (5) and a partition (6) forming a detachable bottom.

3. Device according to claim 1 or 2 **characterized in that** it is provided with means (4) for removing whey.

4. Device according to either of claims 2 or 3 **characterized in that** the said sets (1,2) of perforated moulds are mounted so as to slide in the said chamber (3).

5. Device according to claims 2 to 4 **characterized in that** the said means (5) for turning the said chamber are means for pivoting about an axis.

6. Device according to any one of claims 1 to 5, **characterized in that** the moulds (11a, 11b, 11c) of the first set (1) have a cross section that is substantially complementary to that of the moulds (20a, 20b, 20c) of the second set (2) so as to occupy most of the volume of the said chamber (3) .

7. Device according to claim 6 **characterized in that** the said moulds (11a,11b,11c,20a,20b,20c) have a square or rectangular cross section.

8. Device according to claim 6 **characterized in that** the said moulds have a hexagonal cross section.

9. Device according to claim 6 **characterized in that** the moulds (11a,11b,11c) of the first set (1) have a square or rectangular section and **in that** the moulds (20a,20b,20c) of the second set (2) have a hexagonal cross section.

10. Device according to any one of claims 2 to 9 **characterized in that** the height of the moulds (11a,11b,11c) of the first set (1) and that of the moulds (20a,20b,20c) of the second set (2) correspond substantially to half the height of the said chamber (3) and **in that** the moulds (20a,20b,20c) of the second set (2) possess a perforated bottom whereas the other moulds (11a,11b,11c) are open at each of their ends, and **in that** it includes an intermediate sieve (2b) provided with openings with the size of the section of the moulds (20a,20b,20c) of the second set (2) capable of cooperating with one end of the moulds (11a,11b,11c).

11. Device according to any one of claims 1 to 10 **characterized in that** the said sets (1,2) of moulds consist of the association of complementary plates (111a,111b,222a,222b) made of thermoformed plastic material forming half-moulds).

12. Device according to claim 11 **characterized in that** it includes means (113) for attaching the said plates (111a,111b,222a,222b) to the device, provided on the draining sieves or on the chamber.

13. Device according to either of claims 11 or 12 **characterized in that** the sets (1,2) of moulds produced by the association of the said complementary plates (111a,111b,222a,222b) have inter-mould passages (112) facilitating the circulation of cleaning products.

14. Method for producing cheeses, in particular soft cheeses or unripened cheeses, with the aid of a device according to one of claims 3 to 13 **characterized in that** it comprises steps consisting of :
- filling the said chamber (3) at least partially with milk having an addition of rennet and ferments;
- allowing the milk to curdle until curds and whey are obtained;
- removing the whey from the said chamber using the said means of removal (4);
- turning over the said chamber (3) using the said turning means;
- detaching the sieve (2a) situated in the lower position and recovering the curds coming from the corresponding set of moulds;
- turning over the said chamber (3) using the said turning means;
- detaching the partition (6) forming the bottom of the said chamber;
- detaching the other sieve (1a) located in the lower position and recovering the curds coming from the other set of moulds.

15. Method according to claim 14 **characterized in that** it includes complementary steps consisting of causing the sets of moulds (1,2) to slide before detaching the said sieves.

16. Method according to claim 14 or 15 for making cheeses, in particular unripened cheese or soft cheese **characterized in that** it comprises the steps consisting of :
- filling the said chamber (3) at least partially with milk having an addition of rennet and ferments;
- allowing the milk to curdle until curds and whey are obtained;
- removing the whey from the said chamber using the said means of removal (4);
- lifting and attaching the second set (2) of the moulds (20a, 20b, 20c) ;
- placing the said intermediate draining sieve (2b) onto the said first set of moulds (11a,11b,11c);
- positioning a draining sieve (2a) onto the upper part of the chamber (3);
- turning over the said chamber (3) using the said turning means (5);
- replacing the partition (6) forming the bottom of the said chamber by a draining sieve (1a);
- turning over the said chamber (3) using the said turning means (5);
- detaching the sieve (1a) located in the lower position and recovering the curds coming from the corresponding set of moulds;
- turning over the said chamber (3) using the said turning means (5);
- detaching the other sieve (2a) located in the lower position and recovering the curds from the other set of moulds.

17. System for removing curds (3) that can be used with a device according to any one of claims 1 to 13 **characterized in that** it consists of a horizontal support (31) on which a set of vertical perpendicular rods (32) is attached to the said support and which are provided with wires in the shape of a star (33) as well as means enabling the said rods (32) to be put into rotation.

## Patentansprüche

1. Vorrichtung zum Herstellen von Käse, insbesondere Weichkäse oder Frischkäse, die mindestens einen ersten Satz (1) von gelochten Formen (11 a, 11b, 11c) und mindestens einen zweiten Satz (2) von gelochten Formen (20a, 20b, 20c) umfasst, die in einer Wanne (3) angeordnet sind,
**dadurch gekennzeichnet, dass** der erste und der zweite Formensatz (1, 2) derart ausgebildet sind, dass sie ineinander passen.

2. Vorrichtung nach Anspruch 1, **dadurch gekennzeichnet, dass** der erste und der zweite Formensatz (1, 2) derart ausgebildet sind, dass sie jeweils in entgegengesetzter Richtung liegend eingesetzt werden können und, dass sie jeweils mit einem herausnehmbaren Endgitter (1a, 2a) zusammenwirken, wobei die Wanne (3) über Mittel zum Umdrehen (5) sowie über eine Seitenplatte (6) verfügt, die einen herausnehmbaren Boden bildet.

3. Vorrichtung nach einem der Ansprüche 1 oder 2, **dadurch gekennzeichnet, dass** sie über Mittel zum Ablassen (4) der Molke verfügt.

4. Vorrichtung nach einem der Ansprüche 2 oder 3, **dadurch gekennzeichnet, dass** sich die Sätze (1, 2) von gelochten Formen gleitend in die Wanne (3) einsetzen lassen.

5. Vorrichtung nach einem der Ansprüche 2 bis 4, **dadurch gekennzeichnet, dass** es sich bei den Mitteln zum Umdrehen (5) der Wanne um Mittel zum Schwenken um eine Achse handelt.

6. Vorrichtung nach einem der Ansprüche 1 bis 5, **dadurch gekennzeichnet, dass** die Formen (11 a, 11 b, 11 c) des ersten Satzes (1) einen Querschnitt aufweisen, der im wesentlichen den Querschnitt der Formen (20a, 20b, 20c) des zweiten Satzes (2) ergänzt, so dass der wesentliche Teil des Volumens der Wanne (3) besetzt ist.

7. Vorrichtung nach Anspruch 6, **dadurch gekennzeichnet, dass** die Formen (11a, 11b, 11 c, 20a, 20b, 20c) einen quadratischen oder rechteckigen Querschnitt aufweisen.

8. Vorrichtung nach Anspruch 6, **dadurch gekennzeichnet, dass** die Formen einen sechseckigen Querschnitt aufweisen.

9. Vorrichtung nach Anspruch 6, **dadurch gekennzeichnet, dass** die Formen (11 a, 11b, 11c) des ersten Satzes (1) einen quadratischen oder rechteckigen Querschnitt aufweisen und, dass die Formen (20a, 20b, 20c) des zweiten Satzes (2) einen sechseckigen Querschnitt aufweisen.

10. Vorrichtung nach einem der Ansprüche 2 bis 9, **dadurch gekennzeichnet, dass** die Höhe der Formen (11 a, 11b, 11c) des ersten Satzes (1) und die der Formen (20a, 20b, 20c) des zweiten Satzes (2) in etwa der Hälfte der Höhe der Wanne (3) entspricht, dass die Formen (20a, 20b, 20c) des zweiten Satzes (2) einen gelochten Boden aufweisen, während die anderen Formen (11a, 11b, 11c) an beiden Enden offen sind und über ein Zwischengitter (2b) verfügen, mit Öffnungen der Größe des Querschnittes der Formen (20a, 20b, 20c) des zweiten Satzes (2), das in der Lage ist, mit einem Ende der Formen (11a, 11b, 11c) zusammen zu wirken.

11. Vorrichtung nach einem der Ansprüche 1 bis 10, **dadurch gekennzeichnet, dass** die Formensätze (1, 2) aus dem Zusammenfügen von Halbformen bildenden, sich ergänzenden Platten (111a, 111b, 222a, 222b) aus thermisch geformtem Kunststoff gebildet werden.

12. Vorrichtung nach Anspruch 11, **dadurch gekennzeichnet, dass** sie über Mittel (113) zum Befestigen der Platten (111a, 111b, 222a, 222b) an der Vorrichtung verfügt, die auf den Abtropfgittern oder auf der Wanne vorgesehen sind.

13. Vorrichtung nach einem der Ansprüche 11 oder 12, **dadurch gekennzeichnet, dass** die aus dem Zusammenfügen der sich ergänzenden Platten (111a, 111b, 222a, 222b) gebildeten Formensätze (1, 2) Durchgänge zwischen den Formen (112) aufweisen, welche die Zirkulation der Reinigungsmittel fördern.

14. Verfahren zum Herstellen von Käse, insbesondere Weichkäse oder Frischkäse, mit Hilfe einer Vorrichtung nach einem der Ansprüche 3 bis 13,
**dadurch gekennzeichnet, dass** es die folgenden Schritte umfasst:
- Füllen der Wanne (3) zumindest teilweise mit Milch, der Lab und Fermente hinzugefügt sind;
- Gerinnen-lassen der Milch, bis geronnene Stücke und Molke entstehen;
- Ablassen der Molke aus der Wanne mit Hilfe der Ablassmittel (4);
- Umdrehen der Wanne (3) mit Hilfe der Umdrehungsmittel;
- Abtrennen des sich unten befindenden Gitters (2a) und Sammeln der aus dem entsprechenden Formensatz kommenden geronnenen Stücke;
- Umdrehen der Wanne (3) mit Hilfe der Umdrehungsmittel;
- Abtrennen der Wandung (6), welche den Boden der Wanne bildet;
- Abtrennen des anderen unten befindlichen Gitters (1a) und Sammeln der aus dem anderen Formensatz stammenden geronnenen Stücke.

15. Verfahren nach Anspruch 14, **dadurch gekennzeichnet, dass** es die sich ergänzenden Schritte umfasst, welche darin bestehen, vor dem Abtrennen der Gitter die zwei Formensätze (1, 2) gleiten zu lassen.

16. Verfahren nach einem der Ansprüche 14 oder 15 zum Herstellen von Käse, insbesondere Weichkäse oder Frischkäse, **dadurch gekennzeichnet, dass** es die folgenden Schritte umfasst:
- Füllen der Wanne (3) zumindest teilweise mit Milch, der Lab und Fermente hinzugefügt sind;
- Gerinnen-lassen der Milch, bis geronnene Stücke und Molke entstehen;
- Ablassen der Molke aus der Wanne mit Hilfe der Ablassmittel (4);
- Heben und Festsetzen des zweiten Formensatzes (2) (20a, 20b, 20c);
- Anbringen des Abtropfzwischengitters (2b) auf dem ersten Formensatz (11a, 11b, 11c);
- Anbringen eines Abtropfgitters (2a) auf dem oberen Teil der Wanne (3);
- Umdrehen der Wanne (3) mit Hilfe der Umdrehungsmittel (5);
- Ersetzen der Platte (6), die den Boden der Wanne bildet, durch ein Abtropfgitter (1a);
- Umdrehen der Wanne (3) mit Hilfe der Umdrehungsmittel (5);
- Abtrennen des sich unten befindenden Gitters (1a) und Sammeln der aus dem entsprechenden Formensatz kommenden geronnenen Stücke;
- Umdrehen der Wanne (3) mit Hilfe der Umdrehungsmittel (5);
- Abtrennen des sich untern befindenden anderen Gitters (2a) und Sammeln der aus dem anderen Formensatz kommenden geronnenen Stücke.

17. System zum Herausnehmen der geronnen Käsestücke (30), welches mit einer Vorrichtung nach einem der Ansprüche 1 bis 13 verwendet werden kann, **dadurch gekennzeichnet, dass** es aus einer horizontalen Stütze (31) gebildet ist, auf der ein Satz senkrechter Stangen (32) befestigt ist, die senkrecht zur Stütze stehen und über sternförmig angeordnete Fäden (33) sowie über Mittel verfügen, mit denen die Stangen (32) in Umdrehung versetzt werden können.
